# EUROPÄISCHE PATENTANMELDUNG

(11) **EP 4 692 650 A1**
(43) Veröffentlichungstag der Anmeldung: **11.02.2026**
(21) Anmeldenummer: 24193458.7
(22) Anmeldetag: 07.08.2024
(51) Int. Cl.: F24D 19/10, F16K 31/04

(54) **THERMOSTATKOPF UND VERFAHREN ZUM ERMITTELN EINES ÖFFNUNGSPUNKTES EINES HEIZKÖRPERVENTILS**

(71) Anmelder: tado GmbH, 80637 München (DE)
(72) Erfinder: Runte, Thomas, 80637 München (DE); Heim, Lukas, 80637 München (DE)
(74) Vertreter: Ridderbusch, Oliver

(57) **Zusammenfassung**

Ein Öffnungspunkt eines Heizkörperventils (1) wird mit Hilfe eines am Heizkörperventil (1) montierten Thermostatkopfes (10) ermittelt. Der Thermostatkopf (10) umfasst einen Stößel (12) zum Bewegen eines Ventilstifts (2) des Heizkörperventils (1) und einen Motor (M) zum Bewegen des Stößels (12). Eine Kraft, mit welcher der Motor (M) auf den Stößel (12) wirkt, hängt von einem Motorstrom (I) ab, mit welchem der Motor (M) betrieben wird. Es wird eine Position-Strom-Kennlinie (K) aufgenommen, welche abhängig von einem vorgegebenen Motorstrom (I) eine jeweils erreichbare Endposition (P) angibt, bis zu welcher der Ventilstift (2) maximal in Ventilschließrichtung bewegbar ist. Aus der Position-Strom-Kennlinie (K) wird der Öffnungspunkt (PO) des Heizkörperventils (1) abgeleitet, insbesondere kann aus der Veränderung des Gradienten der Kennlinie auf den abrupten Kraftanstieg infolge der Kompression der Ventildichtung geschlossen werden. Dieser Punkt kann als tatsächlicher Öffnungspunkt (PO) gespeichert und als Startpunkt des Aktuators für die Regelung der Raumtemperatur verwendet werden.

## Beschreibung

### TECHNISCHES GEBIET

Die vorliegende Offenbarung bezieht sich auf einen Thermostatkopf und ein Verfahren zum Ermitteln eines Öffnungspunktes eines Heizkörperventils.

### HINTERGRUND

Ein typisches Heizkörperventil, wie es an Heizkörpern zum Heizen von Räumen verwendet wird, drosselt über einen Ventilstift/Ventilpin (meist ein gummierter Stempel) den Volumenstrom von Heizungswasser, das den Heizkörper durchströmt. Wenn der Raum die Solltemperatur erreicht hat, ist es erstrebenswert, den Volumenstrom annähernd konstant zu halten. Dadurch kann eine Temperatur des Heizkörpers zeitlich weitgehend konstant sein, was den thermischen Komfort steigert.

Bei einem solchen konstanten Heizbetrieb ist die Öffnung des Heizkörperventils verhältnismäßig klein und beträgt in der Regel zwischen 0,1 mm und 0,2 mm, gemessen in Bewegungsrichtung des gummierten Stempels. Der Gesamtventilhub, über welchen der gummierte Stempel bewegbar ist, ist wesentlich größer, typischerweise etwa 2,2 mm. Der Anschlag in Richtung der geschlossenen Ventilposition ist bei einem gummierten (komprimierbaren) Stempel nicht eindeutig. Je nach Kraft eines Aktuators eines verwendeten Thermostatkopfes kann der gummierte Stempel um bis zu 0,8 mm komprimiert werden. Insgesamt ergibt sich daher ein großer Verfahrbereich, aus dem nur ein sehr kleiner Bereich für die Regelung im stationären Betrieb benötigt wird. Je nach Hersteller ist sowohl der Gesamtweg als auch die Härte des Dichtgummis des Stempels und damit die kraftabhängige Kompression unterschiedlich.

Mit typischerweise verwendeten Thermostatköpfen ist die Lage des für einen konstanten Heizbetrieb relevanten Regelbereichs innerhalb des gesamt möglichen Bewegungsbereichs jedoch nicht bekannt oder kann nur unpräzise geschätzt werden. In der Regel muss die Raumtemperatur gemessen und aus einer Änderung der Raumtemperatur geschlussfolgert werden, ob der Thermostatkopf den gummierten Stößel des Heizkörperventiles weiter in Schließrichtung oder Öffnungsrichtung bewegen soll. Nachteilig hierbei ist insbesondere die zeitliche Verzögerung zwischen Betätigen des Ventils und messbarer Veränderung der Raumtemperatur.

Wünschenswert wäre die Kenntnis des tatsächlichen Öffnungspunkts, ab welchem der gummierte Stößel die Ventilöffnung freigibt, durch welche Heizwasser durch das Ventil strömen kann. Mit Kenntnis des Öffnungspunktes könnte der relevante Regelbereich für insbesondere den stationären Heizbetrieb genauer festgelegt und schneller angefahren werden. Temperaturschwingungen durch zu weites Öffnen oder Schließen des Ventils könnten vermieden werden.

Die tatsächliche Öffnungsposition eines Heizkörperventils ist jedoch an sich unbekannt. Herkömmliche Thermostatköpfe an Heizkörperventilen erlauben nicht oder jedenfalls nicht in einfacher Weise eine Aussage, bei welcher Einstellung des Thermostatkopfes die tatsächliche Öffnungsposition erreicht ist. Insbesondere beinhalten typische Thermostatköpfe keine hierfür vorgesehenen Sensoren. Ein Ergänzen spezieller Sensoren zum Ermitteln, bei welcher Einstellung gerade die Öffnungsposition eines Heizkörperventils erreicht wird, würde mit Mehrkosten einhergehen und möglicherweise zu einem erhöhten Raumbedarf des Thermostatkopfes führen.

Als Hintergrund wird auf EP 3 339 752 B1 verwiesen, insbesondere Absatz 0025, wonach ein Temperatatursensor in der Umgebung eines Heizkörperventil eine Temperatur misst und je nach Abweichung der gemessenen Temperatur von einer Solltemperatur das Heizkörperventil geöffnet oder geschlossen wird.

EP 4 016 236 B1 behandelt den Fall, dass ein Konstantbetrieb eines Heizkörpers gewünscht ist. Ein Strom von Heizwasser durch den Heizkörper wird durch ein Heizkörperventil mit daran montiertem Thermostatkopf geregelt. In einem konstanten Heizbetrieb wird eine zeitliche Temperaturänderung im Bereich des Heizkörpers gemessen. Übersteigt die zeitliche Temperaturänderung einen Grenzwert, wird über den motorisierten Thermostatkopf automatisiert das Heizkörperventil verstellt, um der Temperaturänderung entgegenzuwirken, siehe insbesondere Absatz 0007 von EP 4 016 236 B1. Die Regelung des Konstantbetriebs erfolgt somit zeitlich verzögert über die ermittelte Temperaturänderung; der Öffnungspunkt des Heizkörperventiles ist unbekannt und wird nicht in der Regelung berücksichtigt.

In ähnlicher Weise ist ein Thermostatkopf möglich, der direkt am Ventil einen Temperaturfühler verbaut hat. Ist der metallische Ventilkörper kalt und wird das Ventil langsam geöffnet, erwärmt das durchströmende Heizungswasser den Ventilkörper, sobald die Öffnungsposition erreicht ist. Stellt der Temperaturfühler diese Erwärmung fest, kann auf die Öffnungsposition geschlossen werden. Nachteilig ist, dass die Messung der Öffnungsposition größere Zeiträume erfordert, da bei geringer Öffnungsposition das Wasser nur sehr langsam zum Heizkörperventil fließt und die messbare Erwärmung entsprechend langsam ist. Außerdem kann dieses Vorgehen nur erfolgen, wenn das Ventil zunächst kalt ist, das heißt, es muss vorab genügend lange geschlossen gewesen sein.

Außerhalb des Heizungsbereichs, z.B. für Hydraulikaufgaben, werden Systeme verwendet, wie sie in EP 3 591 270 B1 beschrieben sind: Dabei kann zwar die Position des Stromregulierungsglieds eines Ventils gemessen werden, allerdings nur im Fall eines durch einen elektromagnetischen Linearaktuator angetriebenen Ventils. Es wird ein elektrischer Strom in der Spule des Linearaktuators gemessen; anhand einer Look-Up Tabelle kann ein zugehöriger erwarteter magnetischer Fluss abgelesen werden. Weicht ein tatsächlich gemessener magnetischer Fluss von dem erwarteten Wert ab, kann auf eine von der Erwartung abweichende Position des Ventilstellglieds geschlossen werden. Dieses Vorgehen löst nicht die vorgenannte Problematik. Insbesondere kann hiermit nicht ohne Weiteres die Öffnungsposition ermittelt werden und das Vorgehen kann nicht auf typische Thermostatventile übertragen werden, bei denen ein gummierter Stempel die Ventilöffnung freigibt oder blockiert und ein Thermostatkopf verwendet wird, welcher in der Regel mit einem per Schrittmotor oder Gleichstrommotor bewegbaren Stößel auf den gummierten Stempel einwirkt.

Es besteht somit das Bedürfnis, die tatsächliche Öffnungsposition eines Heizkörperventiles präzise zu ermitteln, möglichst ohne dass spezielle Sensoren ergänzt werden und ohne dass der Umweg über die verzögerungsbehaftete Änderung der (Umgebungs-)Temperatur gegangen wird.

### KURZFASSUNG

Als eine **Aufgabe** der Erfindung kann angesehen werden, einen Thermostatkopf und ein Verfahren anzugeben, welche es ermöglichen, einfach und dennoch präzise die Öffnungsposition eines Heizkörperventiles zu ermitteln und hiermit insbesondere die Regelung für einen stationären Heizbetrieb effizienter zu gestalten.

Diese Aufgabe wird durch den Thermostatkopf und das Verfahren mit den Merkmalen der unabhängigen Ansprüche gelöst.

Ein erfindungsgemäßes Verfahren betrifft das Ermitteln eines Öffnungspunktes eines Heizkörperventils. Ein am Heizkörperventil montierter Thermostatkopf, welcher einen Stößel zum Bewegen eines Ventilstifts (z.B. eines gummierten Stempels) des Heizkörperventils umfasst, wird verwendet, um das Heizkörperventil zu öffnen und/oder zu schließen. Der Thermostatkopf umfasst einen Motor zum Bewegen des Stößels, wobei eine Kraft, mit welcher der Motor auf den Stößel wirkt, von einem Motorstrom abhängt, mit welchem der Motor elektrisch versorgt wird. Es wird eine Position-Strom-Kennlinie ermittelt, welche abhängig vom (vorgegebenen, aktuell verwendeten) Motorstrom eine jeweils erreichbare Endposition angibt, bis zu welcher der Stößel bzw. der Ventilstift maximal in Ventilschließrichtung bewegbar ist. Aus der Position-Strom-Kennlinie wird der Öffnungspunkt des Heizkörperventils abgeleitet. Hiermit ist bekannt, wie der Motor bzw. Stößel des Thermostatkopfes zu betätigen ist, damit der Öffnungspunkt des Heizkörperventils erreicht wird.

Ein erfindungsgemäßer Thermostatkopf umfasst einen Stößel zum Bewegen eines Ventilstifts eines Heizkörperventils und einen Motor zum Bewegen des Stößels. Eine Kraft, mit welcher der Motor auf den Stößel wirkt, hängt von einem Motorstrom ab, mit welchem der Motor elektrisch versorgt wird. Außerdem ist eine Recheneinrichtung vorgesehen, wobei die Recheneinrichtung und der Thermostatkopf dazu eingerichtet sind, bei Montage an das Heizkörperventil das erfindungsgemäße Verfahren auszuführen.

In verschiedenen Ausführungsformen der Erfindung wird über die mechanische Rückkopplung aus dem Aktuator des Thermostatkopfes die tatsächliche Öffnungsposition des Heizkörperventils bestimmt. Grundlage dafür ist der Kraftverlauf zur Bewegung des Ventilpins: Die Kraft ist weitgehend linear über den Verstellweg, solange nur die Rückstellfeder des Ventilpins komprimiert wird, und steigt bei Kontakt der Gummidichtung mit der Dichtfläche des Ventils abrupt an. Da der Aktuator aber in der Regel keinen Kraftsensor umfasst, sondern lediglich per (Schritt)Motor der Stößel bewegt wird, muss aus der Regelung des Motors auf die Kraft geschlossen werden.

Die maximale Kraft des (Schritt)Motors ist abhängig vom verwendeten Motorstrom. Es kann bei insbesondere konstantem Motorstrom der Stößel des Ventils in Schließrichtung verstellt werden, bis der Motor die zunehmende Kraft nicht mehr überwinden kann. Diese Position wird dem verwendeten Strom zugeordnet. Im nächsten Schritt wird der Strom geringfügig erhöht und der Stößel des Ventils wieder soweit in Schließrichtung verstellt, bis der Motor die zunehmende Kraft nicht mehr überwinden kann. In dieser Weise kann die Position-Strom-Kennlinie gebildet werden.

Aus der Veränderung des Gradienten in der Position-Strom-Kennlinie kann auf den abrupten Kraftanstieg infolge der Kompression der Gummidichtung geschlossen werden. Dieser Punkt kann als tatsächlicher Öffnungspunkt gespeichert und als Startpunkt des Aktuators für die Regelung der Raumtemperatur verwendet werden.

### Optionale Gestaltungen

Varianten des erfindungsgemäßen Thermostatkopfes und des erfindungsgemäßen Verfahrens sind Gegenstand der abhängigen Ansprüche und werden in der folgenden Beschreibung erläutert.

### Thermostatkopf mit Schrittmotor

Der Motor des Thermostatkopfes kann ein Schrittmotor sein. Er kann einen Rotor und Stator umfassen, wobei der Rotor durch ein rotierendes elektromagnetisches Feld des Stators gedreht wird und eine Übersetzung zu einer Linearbewegung des Stößels erfolgt.

Durch die Drehung des Schrittmotors kann der Stößel mit definierter Schrittweite bewegt werden. Indem die Drehung des Schrittmotors bzw. die Anzahl an Schritten des Schrittmotors erfasst / gezählt wird, kann eine Position des Stößels und somit des Ventilstifts des Heizkörperventils erfasst werden. Die Positionsrückmeldung durch den Schrittmotor kann somit ohne Sensoren erfolgen. Je nach Bauweise und Nomenklatur kann die kleinste Weite, um welche der Schrittmotor den Stößel bewegen kann, als ein Schritt oder z.B. ein halber Schritt (allgemeiner: Teilschritt) bezeichnet werden.

Ein Strom (Motorstrom), mit welchem der Schrittmotor versorgt wird, bestimmt die Stärke des elektromagnetischen Feldes und damit die Kraft, mit welcher der Rotor gedreht wird und der Stößel gegen den Ventilstift drückt.

Die jeweils erreichbare Endposition, bis zu welcher der Stößel bzw. der Ventilstift bei einem bestimmten Motorstrom maximal in Ventilschließrichtung bewegbar ist, kann über die Drehung des Schrittmotors bzw. als Anzahl an Schritten des Schrittmotors relativ zu einer Referenzposition erfasst oder gezählt werden. Die Referenzposition kann beliebig festgelegt werden, um über die Schritte des Schrittmotors Positionen des Ventilstifts des Heizkörperventils (oder gleichbedeutend: des Stößels des Thermostatkopfes) anzugeben.

Eine elektronische Motorsteuerung des Thermostatkopfes, z.B. ein Motortreiberchip, kann dazu eingerichtet sein zu erkennen, ob ein magnetisches Überspringen des Schrittmotors (genannt Stall) infolge zu hoher Last erfolgt oder droht. Eine zu hohe Last kann vorliegen, wenn die über den Motorstrom bereitgestellte Kraft des Schrittmotors nicht ausreicht, um die Gegenkraft zu überwinden, die wesentlich von der Rückstellfeder des Ventilstifts des Heizkörperventils abhängt sowie (ab Kontakt des Ventilstifts mit der Ventilsitz-Dichtungsfläche) auch von der Kompression des Dichtungsgummis.

Zur Detektion eines (drohenden) Stall des Schrittmotors kann der Motortreiberchip fortlaufend den Strom in den Motorspulen des Schrittmotors überwachen. Der Strom ist sinusförmig, aber im zeitlichen Mittel wird der Strom konstant gehalten, indem durch hochfrequente Pulsbreitenmodulation (PWM) die Spannung angepasst wird. Eine Frequenz der PWM ist wesentlich höher als die Anzahl an Schritten des Motors pro Sekunde, z.B. mindestens 5 oder 10 mal höher. Erhöht sich die Last auf den Motor, "lehnt" sich der Rotor stärker gegen das sich drehende Magnetfeld, aber noch ohne

Überspringen. Dadurch ändert sich die Rückinduktion vom Rotor in die Spule. Dies wird von der elektronischen Motorsteuerung bemerkt und die PWM wird entsprechend angepasst, um den Strom konstant zu halten.

Für die Erfindung können prinzipiell bekannte Motortreiberchips von Schrittmotorherstellern verwendet werden. Die Motortreiberchips können dazu eingerichtet sein, eine Schätzung oder Wahrscheinlichkeit für ein bevorstehendes magnetisches Überspringen zu berechnen. Beispielsweise kann ein Wert zwischen 0 und y ausgegeben werden, wobei y für eine niedrige Belastung steht (relativ zur maximal möglichen Kraft, die vom Strom abhängt) und 0 für ein sicheres Überspringen steht. Je näher der berechnete Wert an 0 ist, desto wahrscheinlicher wird ein Überspringen erfolgen.

Die elektronische Motorsteuerung kann dazu eingerichtet sein, eine Stall-Warnung (das heißt eine Warnung für ein drohendes magnetisches Überspringen) auszugeben, wenn, insbesondere anhand des überwachten Motorstroms, erkannt wird, dass ein magnetisches Überspringen droht oder erfolgt. Wird eine Stall-Schätzung zwischen 0 und y ausgegeben, kann als Stall-Warnung insbesondere ein Wert nahe 0, z.B. bis zu 0,2*y, angesehen werden.

Als jeweils erreichbare Endposition, bis zu welcher der Ventilstift maximal in Ventilschließrichtung bewegbar ist, wird eine Position verwendet, bei welcher eine Stall-Warnung für ein (drohendes) magnetisches Überspringen des Schrittmotors erzeugt wird. Bei einem magnetischen Überspringen folgt der Rotor des Schrittmotors nicht mehr dem Drehfeld. Die Position, ab welcher ein Überspringen droht, kennzeichnet somit die erreichbare Endposition für einen bestimmten Motorstrom. Eine bisherige Schrittanzahl in Ventilschließrichtung, bis eine Stall-Warnung erzeugt wird, kann somit als Wert für die Endposition verwendet werden.

In der vorgenannten Weise können für verschieden hohe Motorströme jeweils eine zugehörige erreichbare Endposition ermittelt werden. Die entsprechenden Wertepaare aus Motorstrom und zugehöriger Endposition bilden die Position-Strom-Kennlinie, wie nachfolgend näher beschrieben.

### Aufnehmen der Position-Strom-Kennlinie

Die Position-Strom-Kennlinie gibt die maximal erreichbare Endposition, bis zu welcher der Ventilstift des Heizkörperventils maximal in Ventilschließrichtung bewegt werden kann, abhängig von einem verwendeten elektrischen Strom (Motorstrom) an, mit welchem der Motor des Heizkörperthermostaten versorgt wird.

Mit steigendem Motorstrom steigt die Kraft des Motors, weshalb die Position-Strom-Kennlinie auch als Position-Kraft-Kennlinie bezeichnet werden kann bzw. hierzu gleichbedeutend ist. Mit steigendem Motorstrom kann der Motor über den Stößel des Thermostatkopfes den Ventilstift des Heizkörperventils weiter bewegen, gegen die zunehmende Kraft der Rückstellfeder des Heizkörperventils. Die Kraft der Rückstellfeder ist typischerweise linear, gemäß dem Hookeschen Gesetz. Ab dem Kontakt zwischen Ventilstift (z.B. gummierter Stempel) und unbeweglicher Dichtungsfläche des Heizkörperventils erzeugt auch die Kompression des Dichtungsgummis des Heizkörperventils eine Gegenkraft. Diese Gegenkraft wächst mit zunehmender Kompression des Dichtungsgummis. Aus der Kennlinie soll der mechanische Anschlag erkannt werden, das heißt ein Anstieg der Gegenkraft, welcher über die Rückstellkraft der Feder hinaus geht.

Das Ermitteln oder Aufnehmen der Position-Strom-Kennlinie kann in folgender Weise durchgeführt werden, insbesondere in der nachfolgend beschriebenen Reihenfolge:
Prozess A: Der Stößel des Thermostatkopfes wird per Motor bewegt, um den Ventilstift des Heizkörperventils in eine geöffnete Position zu bringen, das heißt in eine Position, welche die Ventilöffnung freigibt.
Prozess B: Der Motor wird mit einem konstanten Motorstrom versorgt, um den Ventilstift in Ventilschließrichtung zu bewegen. Ein konstanter Motorstrom kann bezeichnen, dass mittels der Schrittmotorsteuerung der Motorstrom im zeitlichen Mittel, also über mehrere magnetische Umdrehungen, konstant gehalten wird. Es wird eine zugehörige Position (Endposition) ermittelt, bis zu welcher der Ventilstift bei diesem Motorstrom maximal in Ventilschließrichtung bewegbar ist. Wie beschrieben, kann bei einem Schrittmotor die Endposition durch das drohende Überspringen ermittelt werden.
Prozess C: Der Motorstrom wird erhöht und es wird wiederum eine zugehörige Endposition ermittelt, bis zu welcher der Ventilstift bei diesem (erhöhten) Motorstrom maximal in Ventilschließrichtung bewegbar ist.
   Optional kann nach Erreichen einer Endposition der Ventilstift zunächst in Öffnungsrichtung zurück bewegt werden, bevor er mit erhöhtem Motorstrom in Ventilschließrichtung bewegt wird. Prozess C beginnt somit optional mit einer Ventilöffnungsbewegung. Hierdurch wird sichergestellt, dass die Endposition stets aus einer Bewegung heraus erreicht wird. Andernfalls könnte eintreten, dass aufgrund von z.B. Haftreibung und anderen Reibungseffekten trotz gesteigerter Motorkraft keine in Ventilschließrichtung weitergehende Endposition erreicht würde. Die Ventilöffnungsbewegung kann eine vorgegebene Schrittanzahl umfassen, z.B. mindestens fünf Schritte oder eine Schrittanzahl zwischen vier und zweihundert.
Prozess D: Die in Prozess C beschriebenen Vorgänge werden mehrmals wiederholt, so dass der Motorstrom bei jeder Wiederholung von Prozess C weiter (inkrementell) erhöht wird.
Prozess E: Die Position-Strom-Kennlinie wird aus den in den Prozessen B bis D verwendeten Motorströmen und den ermittelten zugehörigen Endpositionen gebildet. Das vorbeschriebene Verfahren mit inkrementellem Erhöhen des Motorstroms kann Vorteile hinsichtlich der benötigten Zeitdauer bieten. Allgemeiner formuliert kann aber das Ermitteln der Position-Strom-Kennlinie auch in folgender Weise erfolgen: Der Motor des Thermostatkopfes wird mit einem, insbesondere konstanten, Motorstrom versorgt, um den Ventilstift in Ventilschließrichtung zu bewegen und es wird eine zugehörige Endposition ermittelt, bis zu welcher der Ventilstift bei dem verwendeten Motorstrom maximal in Ventilschließrichtung bewegbar ist. Es wird nun mehrmals der Motorstrom verändert und für jeden Motorstrom wird jeweils die zugehörige Endposition ermittelt. Die Wertepaare aus Endposition und hierbei verwendetem Motorstrom stellen die Position-Strom-Kennlinie dar.

Während ein Verändern des Motorstroms zum Ermitteln einer neuen Endposition als ein Erhöhen des Motorstroms beschrieben wurde, kann allgemein auch ein Verringern des Motorstroms erfolgen. Insbesondere können daher zunächst Endpositionen ermittelt werden, welche einer geschlossenen Ventileinstellung (mit unterschiedlich stark komprimiertem Dichtungsgummi) entsprechen, und erst danach werden mit niedrigerem Motorstrom Endpositionen ermittelt, welche unterschiedlich weit geöffneten Ventilstellungen entsprechen. Außerdem ist es allgemein nicht nötig, dass stets ein Erhöhen (oder stets ein Verringern) des Motorstroms erfolgt, um eine neue Endposition zu ermitteln. Beispielsweise kann zunächst eine Position-Strom-Kennlinie aufgenommen werden, wobei sich die verwendeten Motorströme verhältnismäßig stark unterscheiden. Anhand dieser grobaufgelösten Position-Strom-Kennlinie wird ein interessierender Bereich ermittelt, in welchem anschließend weitere Werte ermittelt werden. Der interessierende Bereich kann ein Bereich sein, in welchem ein zunächst in etwa linearer Verlauf abflacht oder ein Knick der Position-Strom-Kennlinie vorliegt.

Im Fall eines Schrittmotors können insbesondere mehrere diskrete Punkte (Endpositionen) ermittelt worden sein. Allgemein, beispielsweise bei Verwendung eines Gleichstrommotors und Positionssensors, kann aber auch eine kontinuierliche Kennlinie aufgenommen werden.

### Auswerten der Position-Strom-Kennlinie

Aus der Position-Strom-Kennlinie kann ein Öffnungspunkt des Heizkörperventils geschätzt bzw. abgeleitet werden.

Aus der Veränderung des Gradienten der Kennlinie kann auf den abrupten Kraftanstieg infolge der Kompression der Ventildichtung geschlossen werden. Dieser Punkt kann als tatsächlicher Öffnungspunkt gespeichert werden.

Konkret kann beispielsweise ein Knick oder Beginn eines Abflachens der Position-Strom-Kennlinie rechnerisch ermittelt werden, ab welchem sich mit zunehmendem Motorstrom die jeweils erreichbare Endposition, bis zu welcher der Ventilstift maximal in Ventilschließrichtung bewegbar ist, weniger stark ändert. Die Position des Knicks kann als Öffnungspunkt verwendet werden oder allgemeiner kann der Öffnungspunkt aus der berechneten Position des Knicks oder Abflachens abgeleitet werden. Der in dieser Weise ermittelte Knick oder Punkt/Bereich des Abflachens kann eine Position kennzeichnen, bei welcher bereits eine kleine Kompression des Gummis des gummierten Stempels erfolgt ist, so dass der Wechsel von einer geringfügig geöffneten zu einer geschlossenen Position bereits etwas vor dem Bereich des Abflachens erfolgt ist. Daher kann der Öffnungspunkt z.B. als Position geschätzt werden, welche um eine vorgegebene Schrittanzahl vor einem berechneten Abflachbereich oder Knick liegt.

Zahlreiche verschiedene mathematische Auswertungen sind möglich, um aus der Position-Strom-Kennlinie auf den Öffnungspunkt zu schließen. Allgemein wird hierbei erfasst, ab welcher Position mit zunehmendem Motorstrom die Kennlinie weniger stark steigt. Bei dieser Position kommt zu der Rückstellkraft der Feder auch die Dichtungskompression hinzu, welche ab einer geschlossenen Position bei weiterer Bewegung in Schließrichtung erfolgt.

Es kann z.B. der Gradient bzw. die Steigung der Position-Strom-Kennlinie berechnet werden. Fällt die Steigung (auch als Gradientenabfall bezeichnet), kann auf eine geschlossene Ventilposition geschlossen werden. Die Position kann auch durch ein lokales oder globales Minimum der zweiten Ableitung der Position-Strom-Kennlinie ermittelt werden. Außerdem kann ein Abflachen dadurch erkannt werden, dass eine Differenz zwischen zwei Endpositionen zu zwei Motorstromwerten kleiner als ein vorgegebener Schwellwert ist, z.B. < 300 µm. Hat das Erhöhen des Motorstroms um einen vorgegebenen Wert zur Folge, dass die zugehörige Endposition sich nur um einen Wert kleiner dem vorgegebenen Schwellwert in Ventilschließrichtung ändert, kann auf ein Abflachen bzw. ein Erreichen des Ventilanschlags geschlossen werden.

Ein Auswerten der Position-Strom-Kennlinie kann entweder nach Aufnahme aller Werte der Position-Strom-Kennlinie erfolgen oder bereits während noch Werte der Position-Strom-Kennlinie aufgenommen werden. Beispielsweise können für die Aufnahme der Position-Strom-Kennlinie die verwendeten Motorströme inkrementell erhöht werden und nach jeder neuen Ermittlung einer Endposition wird die bisher aufgenommene Position-Strom-Kennlinie danach ausgewertet, ob ein Abflachen der Position-Strom-Kennlinie bei zunehmendem Motorstrom vorliegt. Die Messungen werden beendet, sobald ein Abflachen in der bisher aufgenommenen Position-Strom-Kennlinie festgestellt wird (oder ein anderes Maß für die steigende Gegenkraft aufgrund der Ventildichtungskompression erkannt wird, z.B. ein Abfall im Gradienten der bisher aufgenommenen Position-Strom-Kennlinie). Für die oben beschriebenen Prozesse A-E bedeutet dies, dass Prozess D beendet wird, sobald insbesondere ein Abflachen in der bisher aufgenommenen Position-Strom-Kennlinie festgestellt wird.

### Regelbereich des Thermostatkopfes

Ein Regelbereich (Arbeitsbereich) des Thermostatkopfes, insbesondere für einen konstanten Heizbetrieb, kann abhängig von dem ermittelten Öffnungspunkt des Heizkörperventils festgelegt werden. Als konstanter Heizbetrieb oder Konstantbetrieb kann insbesondere der Fall angesehen werden, dass eine bereits erreichte Solltemperatur konstant bleibt und eine konstante Heizleistung eingestellt werden soll.

Insbesondere kann ein Ende des Regelbereichs des Thermostatkopfes durch den Öffnungspunkt des Heizkörperventils definiert werden. Vorteilhafterweise wird hierdurch der prinzipiell mögliche Verstellbereich eines Thermostatkopfes auf einen erheblich kleineren, relevanten Regelbereich reduziert. Für den konstanten Heizbetrieb wird hierdurch vermieden, dass Ventilstellungen eingenommen werden, in welchen das Dichtungsgummi komprimiert wird. Der Regelbereich kann optional eine vorgegebene Weite vor dem Öffnungspunkt enden (z.B. eine vorgegebene Schrittzahl vor dem Öffnungspunkt), wodurch ein vollständiges Schließen des Ventils im konstanten Heizbetrieb ausgeschlossen wird.

Bei einem Schrittmotor kann ein Regelbereich durch eine Schrittanzahl festgelegt werden. Hierbei ist bekannt, wie eine Schrittanzahl mit einem Verfahrweg in z.B. µm zusammenhängt.

Der Regelbereich kann beispielsweise mit dem ermittelten Öffnungspunkt (oder bei einer definierten Schrittanzahl vor/hinter dem Öffnungspunkt) beginnen. Das andere Ende des Regelbereichs, welches eine offene Ventilstellung bewirkt, kann z.B. 500 µm entfernt sein. Dieses Ende muss nicht aus der Kennlinie abgeleitet werden. Denn der Kraftanstieg ist aufgrund der Federkompression über einen weiten Weg linear, so dass aus dem Kraftanstieg nicht präzise darauf geschlossen werden kann, wie weit das Ventil geöffnet ist bzw. wie groß der Volumenstrom ist. Dies hängt maßgeblich von der Ventilbauform ab. Daher kann das Regelbereichsende, welches eine offene Ventilposition angibt, durch Erfahrungswerte oder separate Messungen festgelegt werden. Prinzipiell kann aus der Position-Strom-Kennlinie ermittelt werden, ab welcher Position die Kompression der Rückstellfeder beginnt (typischer Startwert: 20N). Dieser Punkt kennzeichnet eine weit geöffnete Ventilstellung; eine darüber hinausgehende Bewegung des Stößels in Öffnungsrichtung hat mit Sicherheit keine Wirkung auf die Öffnung des Ventils und wird nicht zur Regelung benötigt.

Varianten der Erfindung betreffen einerseits das Festlegen eines Regelbereichs für einen konstanten Heizbetrieb. Andererseits definieren weitere Erfindungsvarianten den Betrieb eines Thermostatkopfes unter Nutzung des festgelegten Regelbereichs. Das Festlegen des Regelbereichs mit der Ermittlung des Öffnungspunktes kann einmalig erfolgen. Solange die Montage des Thermostatkopfes am Heizkörperventil unverändert bleibt, sind Wiederholungen der Ermittlung des Öffnungspunktes nicht zwingend nötig. Wiederholungen können aber nach z.B. einer vorgegebenen Zeitspanne vorgesehen sein, z.B. (mindestens) einmal pro Heizperiode. Wird der Thermostatkopf in einem konstanten Heizbetrieb verwendet, in welchem eine konstante Solltemperatur beibehalten werden soll, so wird für ein Verstellen des Stößels (und damit des Ventilpins) allein der festgelegte Regelbereich verwendet, dessen Ende durch den Öffnungspunkt des Heizkörperventils definiert wurde.

Liegt kein konstanter Heizbetrieb vor, können Einstellungen außerhalb des vorgenannten Regelbereichs verwendet werden. Soll beispielsweise das Ventil schlicht geschlossen werden, kann eine Einstellung jenseits des Öffnungspunkts eingenommen werden, so dass das Ventildichtungsgummi komprimiert wird. Wird die Solltemperatur erhöht, kann das Ventil weit geöffnet werden, womit möglicherweise eine Position außerhalb des vorgenannten Regelbereichs eingenommen wird.

### Abgrenzung zur Strombeobachtung für eine Ventilanschlagsschätzung

Zum Verständnis von Erfindungsvarianten und zur besseren Abgrenzung werden nachfolgend Vorarbeiten zu der Erfindung beschrieben: Ein Schrittmotor hat typischerweise vier Phasen. Die zugehörigen Spulen können angeschaltet werden, indem die Batteriespannung des Thermostatkopfes angelegt wird. Ein Kalibriervorgang ist prinzipiell möglich, indem der Strom beobachtet wird, während der Motor das Ventil von Offen zu Geschlossen bewegt. Es erfolgt keine Modulation des Stroms. Der Strom wird gemessen, typischerweise indem er in eine Spannung umgewandelt gemessen wird. Das Messsignal ist in der Regel jedoch stark verrauscht. Während der Motorbewegung kommt es zu einer Spitze im gemessenen Strom, wenn die Schließposition erreicht wird. Indem diese Spitze ermittelt wird, kann auf die Schließposition des Ventils geschlossen werden. Die genutzte Spannung kann konstant gehalten werden, indem beispielsweise das Spannungsniveau der Thermostatbatterie verwendet wird, während der Strom gemessen wird, um den Ventilanschlag zu detektieren. Dies ist ein verhältnismäßig grobes Verfahren. Im Gegensatz hierzu wird bei Varianten der Erfindung der Strom konstant gehalten, indem die Spannung für den Motor moduliert wird. Der Strom kann dann inkrementell gesteigert werden, um eine jeweilige Endposition zu ermitteln.

### Gleichstrommotor anstelle eines Schrittmotors

Viele herkömmliche Thermostatköpfe verwenden elektronische Schrittmotoren. Die Erfindung ermöglicht vorteilhafterweise, ausgehend von solchen Thermostatköpfen mit Schrittmotoren die Position-Strom-Kennlinie aufzunehmen, sofern die Recheneinrichtung bzw. elektronische Komponenten für die Aufnahme und Auswertung der Kennlinie eingerichtet werden können.

Prinzipiell ist aber ein Schrittmotor nicht zwingend. Es kann auch ein anderer Motortyp, beispielsweise ein Gleichstrommotor, im Thermostatkopf eingesetzt werden.

Bei einem Gleichstrommotor kann direkt über die Begrenzung des Stroms auf die maximale Kraft geschlossen werden, oder alternativ aus der Spannung, da bei Blockierung das Ohmsche Gesetz U=R*I gilt.

Ein Gleichstrommotor an sich bietet jedoch keine einfache Rückmeldung über die Position des Rotors oder die vollzogenen Umdrehungen. Wird beispielsweise lediglich die Zeit erfasst, für welche der Gleichstrommotor betrieben wird, um auf einen gefahrenen Weg zu schließen, kann nicht auf die Endposition geschlossen werden, welche bei einer bestimmten Motorkraft maximal in Ventilschließrichtung möglich ist. Daher ist für einen Gleichstrommotor ein zusätzlicher Sensor nötig, der z.B. die Rotordrehung mitzählt. Allgemein ist ein zusätzlicher Positionssensor (z.B. ein Impulsgeber) bei Verwendung eines Gleichstrommotors erforderlich. Werden ein Gleichstrommotor und ein Positionssensor zusammen verwendet, kann eine Endposition, bis zu welcher der Stößel und das Betätigungselement maximal in Schließrichtung bewegbar sind, gemessen werden. Eine ermittelte Position kann später reproduziert, das heißt wieder angefahren werden, weil durch den Positionssensor jede Bewegung des Motors bekannt ist. Ein Kraft-Weg-Verlauf bzw. die bereits beschriebene Kennlinie kann mit einem Positionssensor insbesondere in einer Fahrt von Offen zu Geschlossen gemessen werden.

### Direkte Kraftmessung

Ein Vorteil des beschriebenen Vorgehens bei der Verwendung von Schrittmotoren liegt darin, dass keine speziellen Sensoren zur Messung der Kraft oder des Ventilanschlags nötig sind. Allgemein kann aber auch ein Kraftsensor ergänzt werden, welcher die Kraft der Ventilbetätigung direkt misst. Beispielsweise kann ein Kraftsensor zwischen Aktuator und Ventilpin ergänzt werden. Hierbei kann der Thermostatkopf über einen prinzipiell beliebigen Motor verfügen. Dies bietet eine Alternative zu der indirekten Kraftmessung über den Strom (bei Gleichstrommotoren) oder zu der Begrenzung des Stroms und Messung des magnetischen Winkels (Stalldetektion beim Schrittmotor).

Der konstruktive Aufwand ist in der Regel bei direkter Kraftmessung höher. Dennoch können auch hiermit die vorgenannte Kennlinie und somit der Kontaktpunkt des Ventils ermittelt werden.

Bei Verwendung eines Kraftsensors kann der Kraft-Weg-Verlauf z.B. in einer Fahrt von Offen zu Geschlossen gemessen werden.

### Allgemeine Eigenschaften

Als Thermostatkopf wird vorliegend eine Vorrichtung mit Gehäuse verstanden, das an ein Heizkörperventil montierbar/schraubbar ist. Im Gehäuse befinden sich unter anderem ein Motor und ein Stößel, der vom Motor antreibbar ist, um das Heizkörperventil bzw. einen Ventilstift des Heizkörperventils zu betätigen und so einen Volumenstrom durch das Heizkörperventil zu ändern. Ein Thermostatkopf kann auch als Heizkörperthermostat oder Thermostataufsatz bezeichnet werden.

Heizkörperventile werden teilweise auch als Thermostatventil-Unterteil bezeichnet. Vorliegend bezeichnet ein Heizkörperventil ein Ventil an einem Heizkörper, welches über einen Ventilstift verfügt, durch welchen eine Öffnungsgröße und somit ein Volumenstrom durch den Heizkörper variiert werden kann. Der Ventilstift kann allgemein einteilig oder mehrteilig aufgebaut sein und bezeichnet hier die Komponente, welche im Heizkörperventil linear bewegbar ist, einen für den Heizkörperthermostaten zugänglichen Pin aufweist, gegen welchen der Stößel drücken kann, und (gegebenenfalls mit einer Dichtung oder einem Gummi) gegen eine insbesondere unbewegliche Dichtungsfläche des Heizkörperventils drücken kann.

Zur sprachlichen Einfachheit wird vorliegend meist Heizwasser für das Heizungsmedium genannt, wobei allgemein anstelle von Wasser auch ein beliebiges anderes Fluid verwendet werden kann, z.B. ein Heizöl oder Dampf, und allgemein das Fluid auch der Kühlung dienen kann. Ein Heizkörperventil kann daher allgemein auch schlicht als Ventil bezeichnet werden.

In verschiedenen Ausführungsvarianten wird der Ventilstift/Ventilpin des Ventils als gummierter Stempel beschrieben. Das Gummi des Stempels wird vorliegend auch als Gummidichtung oder Dichtungsgummi bezeichnet. In Abwandlungen hiervon kann ein Stempel ohne Gummierung verwendet werden, wobei der Ventilsitz optional mit einer Dichtung / einem Gummi versehen sein kann.

Als Öffnungspunkt oder Schließpunkt des Heizkörperventils kann eine Position des Ventilstifts verstanden werden, welche den Übergang zwischen einer geöffneten und geschlossenen Ventileinstellung kennzeichnet. Beim Öffnungs-/Schließpunkt wird gerade ein Kontakt zwischen dem Ventilstift und dem Ventilsitz hergestellt, z.B. zwischen einer Gummidichtung des Ventilstifts und einer Dichtfläche am nicht beweglichen Teil des Heizkörperventils. In anderen Worten kann als Öffnungspunkt oder Öffnungsposition diejenige Position des Ventils angesehen werden, ab welcher das Heizungsmedium anfängt, durch das Ventil zu strömen. Der Öffnungs- bzw. Schließpunkt entspricht einer bestimmten Position des Stößels des Thermostatkopfes. Daher kann gleichbedeutend davon gesprochen werden, dass sich der Stößel oder der Ventilstift am Öffnungspunkt befindet. Der Öffnungs-/Schließpunkt kann auch als mechanischer Endanschlag des Heizkörperventils bezeichnet werden, wobei jedoch zu verstehen ist, dass eine Bewegung über diese Position hinaus aufgrund der Kompression des Dichtungsgummis möglich ist.

Der Stößel des Thermostatkopfes kann auch als Aktuator bezeichnet werden und bezeichnet ein per Motor bewegbares Element, welches dazu dient, direkt oder über eine Zwischenkomponente gegen den Ventilpin des Heizkörperventils zu drücken, um dieses zu verstellen.

Die Recheneinrichtung kann elektronische Komponenten bezeichnen, welche insbesondere zum Steuern von Komponenten des Thermostatkopfes eingerichtet sind, z.B. zum Steuern des Motors, und/oder zum Bilden und Auswerten der Position-Strom-Kennlinie. Die elektronischen Komponenten können z.B. einen oder mehrere Chips oder Prozessoren umfassen und können eine Einheit bilden oder räumlich verteilt sein. So können sie entweder vollständig innerhalb des Thermostatkopfgehäuses angeordnet sein oder teilweise (oder prinzipiell auch vollständig) außerhalb des Thermostatkopfgehäuses. Beispielsweise können Informationen betreffend Position und Motorstrom von elektronischen Komponenten innerhalb des Gehäuses erfasst und über eine Internetverbindung an einen entfernen Computer / Server gesendet werden, auf welchem die Auswertung der Kennlinie erfolgt. Der Computer / Server ist in diesem Fall Teil der Recheneinrichtung.

Die als zusätzliche Vorrichtungsmerkmale beschriebenen Eigenschaften der Erfindung ergeben bei bestimmungsgemäßer Verwendung auch Varianten des erfindungsgemäßen Verfahrens. In umgekehrter Weise können der Thermostatkopf bzw. die Recheneinrichtung auch zum automatisierten Ausführen der beschriebenen Verfahrensvarianten eingerichtet sein.

### KURZBESCHREIBUNG DER FIGUREN

Weitere Wirkungen und Merkmale der Erfindung werden nachstehend mit Bezug auf die beigefügten schematischen Figuren beschrieben. Gleiche und gleich wirkende Bestandteile sind in der Regel mit denselben Bezugszeichen gekennzeichnet.
- FIG. 1: zeigt schematisch einen Thermostatkopf, der an ein Heizungsventil eines Heizkörpers montiert ist;
- FIG. 2: zeigt schematisch einen Querschnitt des Thermostatkopfes aus FIG. 1;
- FIG. 3 - 6: zeigen schematisch verschiedene Einstellungen eines Heizungsventils;
- FIG. 7: zeigt schematisch eine Kennlinie, welche eine erreichbare Endposition abhängig von der verwendeten Motorkraft angibt; und
- FIG. 8: zeigt schematisch den Gradienten der Kennlinie aus FIG. 7.

### DETAILLIERTE BESCHREIBUNG VON AUSFÜHRUNGSBEISPIELEN

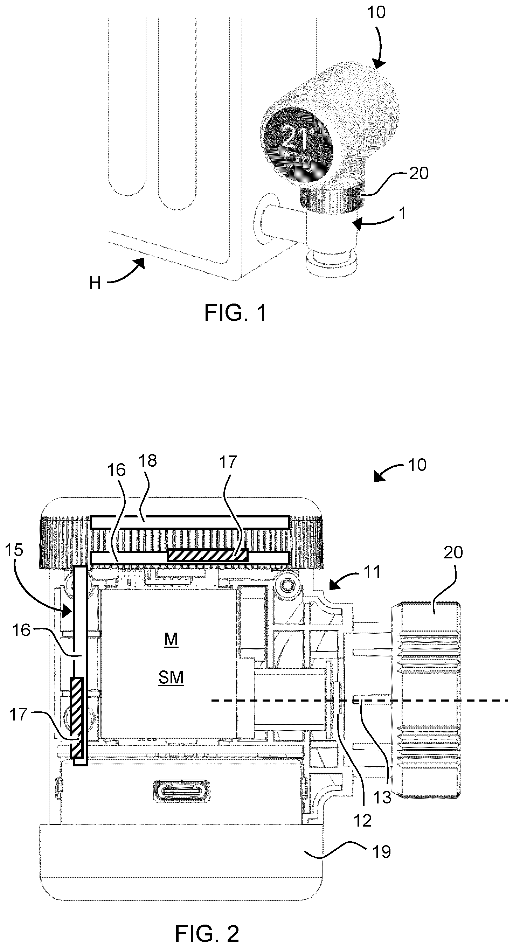

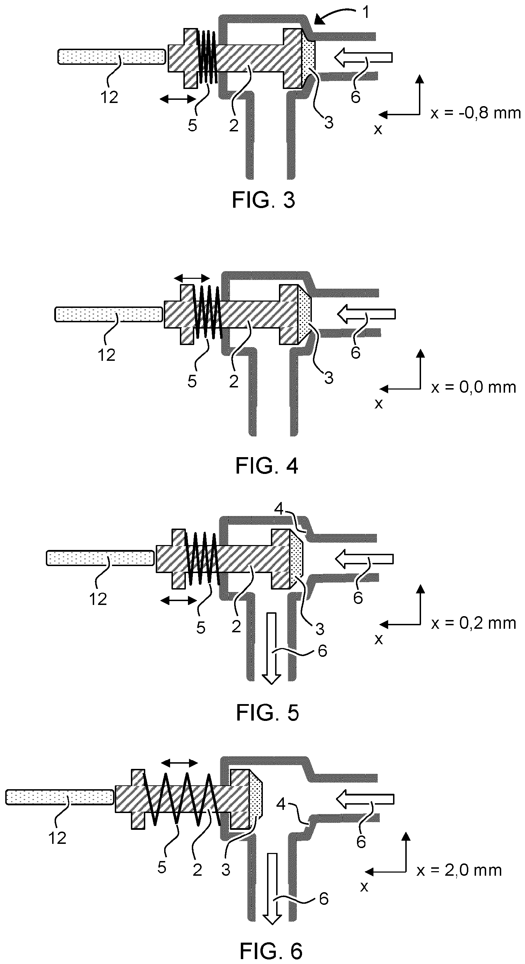

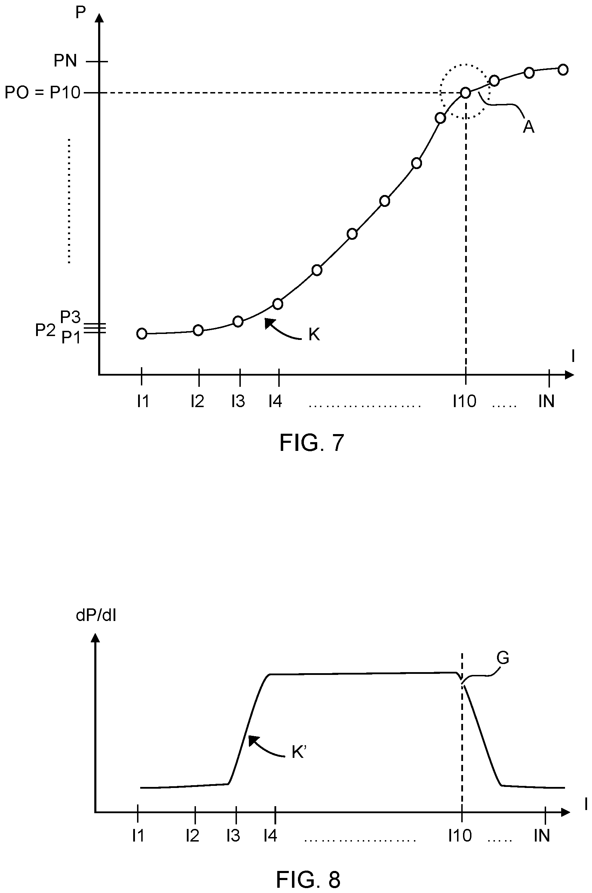

Zum besseren Verständnis wird zunächst mit Bezug auf die FIG. 1 und 2 ein Thermostatkopf, der an ein Heizungsventil eines Heizkörpers montiert ist, beschrieben, und mit Bezug auf die FIG. 3 bis 6 werden verschiedene Ventileinstellungen gezeigt, wie sie vom Thermostatkopf eingestellt werden können. Danach wird mit Bezug auf die FIG. 7 und 8 erläutert, wie ein Öffnungspunkt des Thermostatventils in erfindungsgemäßen Beispielen ermittelt wird.

### FIG. 1 und 2: Thermostatkopf, montiert an ein Heizkörperventil

FIG. 1 zeigt schematisch ein Ausführungsbeispiel eines erfindungsgemäßen Thermostatkopfes 10, welcher eine Überwurfmutter 20 umfasst, mit welcher er an einem Heizkörperventil 1 eines Heizkörpers H montiert ist. Der Thermostatkopf 10 kann das Heizkörperventil 1 öffnen und schließen, so dass ein Heizwasserstrom durch den Heizkörper H variabel eingestellt werden kann.

FIG. 2 zeigt schematisch einen Querschnitt des Thermostatkopfes 10 aus FIG. 1. Der Thermostatkopf 10 umfasst ein Gehäuse 11, in welchem unter anderem ein Motor M und ein Stößel (Stellglied) 12 angeordnet sind. Der Stößel 12 kann vom Motor M entlang einer Bewegungsachse 13 bewegt werden. Dadurch kann der Stößel 12 einen Ventilstift des Heizkörperventils in eine Schließrichtung (in FIG. 2 nach rechts) bewegen. Wird der Stößel 12 zurückbewegt (in FIG. 2 nach links), wird der Ventilstift durch eine zugehörige Rückstellfeder entsprechend zurückbewegt. In dem gezeigten Beispiel ist der Motor M ein Schrittmotor SM, wobei alternativ auch eine andere Bauweise des Motors M möglich ist.

Der Thermostatkopf 10 verfügt auch über eine Recheneinrichtung 15, welche verschiedene elektronische Komponenten umfassen kann und insbesondere zur Ansteuerung des Motors M und für später näher beschriebene Datenauswertungen eingerichtet ist. In dem gezeigten Beispiel umfasst die Recheneinrichtung 15 Leiterplatten 16 mit Steuerelektronik 17 für den Motor M und für einen Bildschirm 18 des Thermostatkopfes 10.

Im Gehäuse 11 ist auch eine Batterie 19 vorhanden, welche Komponenten des Thermostatkopfes 10 mit Energie versorgt, insbesondere den Motor M und die Recheneinrichtung 15.

### FIG. 3 bis 6: Verschiedene Ventileinstellungen

Die FIG. 3 bis 6 zeigen jeweils schematisch einen Querschnitt eines Heizkörperventils 1 und eines Stößels 12 eines hier nicht weiter dargestellten Heizkörperthermostaten, der am Heizkörperventil 1 montiert ist. Bei dem Heizkörperventil 1 und dem Stößel 12 des Heizkörperthermostaten kann es sich um die entsprechenden Komponenten der FIG. 1 und 2 handeln, oder um vergleichbare Komponenten.

Konkret zeigen die FIG. 3 bis 6 jeweils ein Heizkörperventil 1, welchen einen Heizwasserstrom 6 variabel einstellen kann. Das Heizkörperventil 1 umfasst einen bewegbaren Ventilstift 2, welcher hier als gummierter Stempel gestaltet ist und somit an einem Ende eine Gummidichtung 3 umfasst. Der Ventilstift 2 bzw. die Gummidichtung 3 kann gegen eine Dichtungsfläche 4 eines Ventilsitzes des Heizkörperventils 1 drücken (zur besseren Sichtbarkeit ist die Dichtungsfläche 4 nur in den FIG. 5 und 6 beschriftet). Das Heizkörperventil 1 umfasst außerdem eine Rückstellfeder 5, welche den Ventilstift 2 in Öffnungsrichtung x des eingezeichneten Koordinatensystems drückt. Zum Schließen des Ventils kann der rein schematisch gezeigte Stößel 12 des Thermostatkopfes den Ventilstift 2 entgegengesetzt zur Öffnungsrichtung x (das heißt in Schließrichtung bzw. nach rechts in den FIG. 3 bis 6) bewegen.

Die FIG. 3 bis 6 unterscheiden sich in einer Ventileinstellung: In FIG. 3 ist das Ventil geschlossen und die Gummidichtung 3 ist komprimiert, das heißt sie drückt gegen die Dichtungsfläche 4. Diese geschlossene Position entspricht einem Positionswert in Öffnungsrichtung x von x = -0,8 mm.

In FIG. 4 berührt die Gummidichtung 3 gerade die Dichtungsfläche 4, was den Übergang zwischen einer geöffneten und geschlossenen Position darstellt. Diese Position wird vorliegend auch als Öffnungspunkt oder Schließpunkt bezeichnet und kann insbesondere als diejenige Position verstanden werden, ab welcher gerade ein hinreichender Kontakt zum Unterbinden des Heizwasserstroms 6 durch das Heizkörperventil 1 besteht. Diese Position wird als x = 0,0 mm bezeichnet.

In FIG. 5 ist das Heizkörperventil 1 geöffnet, wobei der Ventilstift 2 (bzw. die Gummidichtung 3 des Ventilstifts 2) nur um 0,2 mm von der Dichtungsfläche beabstandet ist, das heißt es gilt: x = 0,2 mm.

FIG. 6 zeigt den Fall eines sehr weit oder vollständig geöffneten Heizkörperventils mit x = 2 mm.

Verschiedene herkömmliche Thermostatköpfe schließen bzw. öffnen bei einer vorgegebenen Abweichung der Temperatur von einem Sollwert, z.B. bei einer Abweichung von 1 °C, das Heizkörperventil vollständig, was einem Wechsel zwischen den Positionen der FIG. 3 und FIG. 6 entspricht.

Für die Fälle, dass eine Solltemperatur erhöht wird oder eine bisher erreichte Solltemperatur erniedrigt wird, ist ein Einstellen der Positionen aus FIG. 3 und FIG. 6 eine geeignete Wahl. Hiervon unterscheidet sich ein konstanter Heizbetrieb, welcher vorliegen kann, wenn eine Solltemperatur erreicht wurde und die Solltemperatur konstant bleibt. In diesem Fall sollte ein zeitlich möglichst konstanter Volumenstrom durch den Heizkörper eingestellt werden. Dies wird durch den Umstand erschwert, dass die Öffnungsposition aus FIG. 4 nicht ohne Weiteres bekannt ist und der mögliche Verfahrweg zwischen der geschlossenen Position der FIG. 3 und der geöffneten Position der FIG. 6 sehr groß ist. Einen passenden Regelbereich für den konstanten Heizbetrieb zu finden, stellt daher eine Herausforderung dar. Ein geeigneter Regelbereich kann z.B. durch den Verfahrweg zwischen den Positionen der FIG. 4 und FIG. 5 begrenzt sein oder alternativ zwischen der Position x = 0,0 mm der FIG. 4 und einer Öffnungsposition, welche beispielsweise zwischen x = 0,4 mm und x = 1,5 mm liegen kann. Dieser Wert kann abhängig von der Bauform des Heizkörperventils 1 gewählt sein.

Weist ein Thermostatkopf einen Schrittmotor auf, kann aus einer bekannten Schrittweite zwar verhältnismäßig leicht ein Verfahrweg in z.B. µm ermittelt werden; unbekannt ist dabei aber der Absolutwert von x, das heißt die Position relativ zur Dichtungsfläche 4 bzw. der Abstand zur Dichtungsfläche 4.

Für die Regelung wäre es von Vorteil, wenn der Regelbereich für den konstanten Heizbetrieb a priori bekannt ist. Dies kann durch die Erfindung erreicht werden, wie später mit Bezug auf die nächste Figur detaillierter beschrieben. Hierfür wird genutzt, dass die benötigte Kraft zum Einstellen einer bestimmten Position des Ventilstifts 2 positionsabhängig (das heißt x-abhängig) ist. Durch die Kompression der Rückstellfeder 5 steigt die zu überwindende Rückstellkraft, je weiter das Ventil geschlossen wird. Im Wesentlichen steigt die Rückstellkraft linear mit der Position, das heißt in Bezug auf die Öffnungsrichtung x ist die Rückstellkraft linear steigend zu einem Verfahrweg in Richtung -x. Ab dem Ventilanschlag, das heißt ab dem Kontakt zwischen Gummidichtung 3 und Dichtungsfläche 4 (bei x = 0 mm), kommt zu der Kraft der Rückstellfeder 5 eine weitere Kraft hinzu, welche aus der Kompression der Gummidichtung 3 resultiert. Daher kann der Ventilanschlag mit x = 0 mm aus einem Anstieg der benötigten Kraft zum weiteren Schließen des Ventils erkannt werden.

Wird ein Thermostatkopf mit Schrittmotor verwendet, kann aus der Regelung des Schrittmotors auf die Kraft geschlossen werden, mit welcher der Aktuator/Stößel bewegt wird.

Die maximale Kraft des Schrittmotors ist abhängig vom Motorstrom, der zum Betrieb verwendet wird. Der Motorstrom kann konstant gehalten werden und das Ventil kann soweit geschlossen werden, bis der Motor die zunehmende Gegenkraft nicht mehr überwinden kann. Diese Position (Endposition) wird dem verwendeten Strom zugeordnet.

Im nächsten Schritt wird der Motorstrom geringfügig erhöht und das Ventil wieder geschlossen, bis der Schrittmotor die zunehmende Kraft nicht mehr überwinden kann.

In dieser Weise kann eine Position-Strom-Kennlinie gebildet werden, wie mit Bezug auf die folgende Figur weiter beschrieben.

### FIG. 7: Kennlinie: erreichbare Endposition abhängig von der Motorkraft

FIG. 7 zeigt eine Kennlinie (hier bezeichnet als Position-Strom-Kennlinie) K, welche eine Endposition P angibt, die mit einem bestimmten Motorstrom I erreichbar ist. Aufgrund der steigenden Gegenkraft (im Wesentlichen aus der Kompression der Rückstellfeder und einer eventuellen Kompression des Dichtungsgummis) kann mit einer bestimmten Motorstärke bzw. einem bestimmten Motorstrom I nur eine bestimmte Endposition P erreicht werden, bei welcher die verwendete Motorkraft gerade der Gegenkraft gleicht. Der Motor kann mit dem gegebenen Motorstrom den Ventilstift nicht weiter in Schließrichtung bewegen; im Fall eines Schrittmotors droht vielmehr bei der Endposition P ein magnetisches Überspringen.

Um die Position-Strom-Kennlinie K aufzunehmen, wird von einer geöffneten Ventilposition (Startposition) ausgehend der Motor mit einem Strom I1 betrieben, um den Stößel und somit den Ventilstift in Schließrichtung zu bewegen. Mit dem Strom I1 wird eine Endposition P1 erreicht, welche im Fall eines Schrittmotors durch die Wahrscheinlichkeit für ein Überspringen erkannt wird. Die Schrittanzahl ab der Startposition bis zum Erreichen der Endposition P1 wird erfasst. Die Endposition P1 bzw. P kann relativ zu einem beliebigen Referenzpunkt angegeben werden, z.B. relativ zur Startposition.

Nach Erreichen der Endposition P1 wird eine Bewegung in Öffnungsrichtung durchgeführt (z.B. um eine vorgegebene Schrittzahl) und anschließend wird eine Schließbewegung mit einem Motorstrom I2 durchgeführt, wobei I2 > I1 gilt. Mit dem Motorstrom I2 wird eine Endposition P2 erreicht, welche gegenüber P1 weiter in Schließrichtung liegt. Dieses Vorgehen wird für weitere sukzessive erhöhte Motorströme I3, I4, .... bis IN wiederholt, um entsprechende Endpositionen P3, ... PN zu ermitteln. Die ermittelten Endpositionen P1 bis PN werden in Abhängigkeit vom jeweils zugehörigen Motorstrom I1 bis IN zu der Position-Strom-Kennlinie K zusammengefasst. Die Position-Strom-Kennlinie K ist zur Veranschaulichung graphisch in FIG. 7 gezeigt, wobei kein Graph für die Ausführung der Erfindung gebildet werden muss.

Die Position-Strom-Kennlinie K zeigt einen linearen Anstieg (in etwa ab I4), welcher durch die linear steigende Kraft der Rückstellfeder bedingt ist.

Ein Abflachen Ader Position-Strom-Kennlinie K setzt bei dem Motorstrom 110 ein. Das Abflachen entspricht einer zunehmenden Gegenkraft über die Gegenkraft der Rückstellfeder hinaus, was auf den Beginn der Kompression der Gummidichtung zurückzuführen ist. Die zugehörige Endposition P10 wird daher als Öffnungspunkt PO angenommen. Allgemein kann auch eine Position zwischen zwei gemessenen Endpositionen als Öffnungspunkt PO identifiziert werden.

Im Fall eines Schrittmotors ist die Schrittanzahl zum Erreichen der Endposition P10 und somit des Öffnungspunkts PO bekannt. Wird anstelle eines Schrittmotors ein anderer Motor verwendet, können die jeweiligen Endpositionen und somit die Position des Öffnungspunkts PO ebenfalls ermittelt werden, wie im allgemeinen Beschreibungsteil erläutert.

Der Regelbereich für einen konstanten Heizbetrieb kann nun abhängig von dem Öffnungspunkt PO festgelegt werden. Beispielsweise kann sich der Regelbereich in Schließrichtung gerade bis zu dem Öffnungspunkt PO (aber nicht darüber hinaus) erstrecken. Das andere Ende des Regelbereichs (welches die am weitesten geöffnete Stellung des Regelbereichs kennzeichnet) kann vorgegeben sein bzw. aus Erfahrungswerten gewonnen sein, wobei optional die Position-Strom-Kennlinie K zur Plausibilitätskontrolle genutzt werden kann: die am weitesten geöffnete Position des Regelbereichs sollte innerhalb des Bereichs der Position-Strom-Kennlinie K mit linearer Steigung liegen (im gezeigten Beispiel also zwischen I4 und I10). Liegt der vorgegebene Wert (z.B. eine Schrittanzahl, welche 0,5 mm in Öffnungsrichtung ab dem Öffnungspunkt PO entspricht) nicht innerhalb dieses Bereichs mit linearer Steigung, kann auf einen Fehler geschlossen werden.

Zusammengefasst kann aus der Veränderung des Gradienten in der Position-Strom-Kennlinie K auf den abrupten Kraftanstieg infolge der Kompression der Gummidichtung des Ventilstifts bzw. des Heizkörperventils geschlossen werden. Dieser Punkt wird als tatsächlicher Öffnungspunkt gespeichert und kann als Startpunkt des Aktuators für die Regelung der Raumtemperatur verwendet werden.

Auf die genaue Berechnungsweise des Öffnungspunktes PO aus der Position-Strom-Kennlinie K kommt es nicht an. Prinzipiell kann z.B. ein Knick, ein Abflachen, ein Ende eines linear steigenden Bereichs oder ein Abfall im Gradienten der Kennlinie ermittelt werden und für die Bestimmung des Öffnungspunktes PO genutzt werden. Dies wird auch mit Bezug auf die nächste Figur näher beschrieben.

### FIG. 8: Gradient der Kennlinie zur Ermittlung des Öffnungspunktes

FIG. 8 zeigt stark schematisiert den Gradienten K' der Position-Strom-Kennlinie K aus FIG. 7, wofür die Ableitung der Position-Strom-Kennlinie K nach dem Motorstrom I berechnet werden kann. Der Gradient K' zeigt einen konstanten Bereich von in etwa I4 bis I10, was der mit zunehmender Kompression linear steigenden Federkraft der Ventil-Rückstellfeder entspricht. Bei kleineren Motorströmen I1 bis I3 reicht die Motorkraft noch nicht für eine Kompression der Feder aus (wofür z.B. mindestens 20 N nötig ist), weshalb hier der Gradient nahe 0 oder 0 ist. In etwa ab derjenigen Endposition, welche mit dem Motorstrom I10 angefahren werden kann, wird mit zunehmender Motorkraft aufgrund der Kompression der Gummidichtung nur noch eine geringfügig weiter in Schließrichtung liegende Endposition erreicht, das heißt der Gradient K' fällt (Gradientenabfall G) auf einen kleineren Wert oder Richtung null. Der Knick oder Abfall im Gradienten K' kann daher erfasst und die zugehörige Position als Öffnungspunkt PO verwendet werden.

Als ein Vorteil der Erfindung kann daher in verhältnismäßig einfacher und präziser Weise auf den Öffnungspunkt PO geschlossen werden und ein geeigneter Regelbereich, insbesondere für einen konstanten Heizbetrieb, festgelegt werden. Es sind nicht zwingend spezielle Sensoren zur Ermittlung der Position nötig, bei welcher aufgrund eines Kraftanstiegs auf den Öffnungspunkt PO geschlossen werden kann.

Die zu den verschiedenen Figuren beschriebenen Varianten der Erfindung können miteinander kombiniert werden. Die beschriebenen Ausführungsbeispiele sind rein illustrativ und Abwandlungen hiervon sind im Rahmen der beigefügten Ansprüche möglich.

### Bezugszeichenliste

- 1: Heizkörperventil
- 2: Ventilstift (Betätigungsstift)
- 3: Gummidichtung des Ventilstifts 2 / Ventildichtung
- 4: Dichtungsfläche des Heizkörperventils
- 5: Rückstellfeder
- 6: Heizwasserstrom
- 10: Thermostatkopf
- 11: Gehäuse des Thermostatkopfes
- 12: Stößel (Stellglied / Übertragungsstift)
- 13: Bewegungsachse des Stößels
- 15: Recheneinrichtung
- 16: Leiterplatte(n)
- 17: Steuerelektronik, insbesondere elektronische Motorsteuerung
- 18: Bildschirm
- 19: Batterie
- 20: Überwurfmutter
- A: Abflachen der Position-Strom-Kennlinie
- G: Gradientenabfall, d.h. kleiner werdender Gradient der Kennlinie K
- H: Heizkörper
- I: Motorstrom
- I1-IN: jeweiliger, als konstant vorgegebener Motorstrom
- K: Kennlinie (Position-Strom-Kennlinie), welche eine erreichbare Endposition je nach verwendeter Motorkraft angibt
- K': Gradient der Kennlinie K
- M: Motor
- P: Endposition
- P1-PN: jeweils erreichbare Endposition je nach Motorkraft (Motorstrom)
- PO: Öffnungspunkt des Heizkörperventils
- SM: Schrittmotor
- x: Öffnungsrichtung des Ventilstifts

## Patentansprüche

1. Ein Verfahren zum Ermitteln eines Öffnungspunktes eines Heizkörperventils, umfassend:
Verwenden eines am Heizkörperventil (1) montierten Thermostatkopfes (10), wobei der Thermostatkopf (10) einen Stößel (12) zum Bewegen eines Ventilstifts (2) des Heizkörperventils (1) umfasst, um das Heizkörperventil (1) zu öffnen oder zu schließen; wobei der Thermostatkopf (10) einen Motor (M) zum Bewegen des Stößels (12) enthält, wobei eine Kraft, mit welcher der Motor (M) auf den Stößel (12) wirkt, von einem Motorstrom (I) abhängt, mit welchem der Motor (M) elektrisch versorgt wird;
Ermitteln einer Position-Strom-Kennlinie (K), welche für verschiedene Höhen des Motorstroms (I) eine jeweilige Endposition (P) angibt, bis zu welcher der Ventilstift (2) bei dem verwendeten Motorstrom (I) maximal in Ventilschließrichtung bewegbar ist; und
Ableiten des Öffnungspunktes (PO) des Heizkörperventils (1) aus der Position-Strom-Kennlinie (K).

2. Das Verfahren nach Anspruch 1,
wobei aus einem Gradientenabfall (G) der Position-Strom-Kennlinie (K) oder einem Abflachen (A) der Position-Strom-Kennlinie (K) auf einen Kraftanstieg infolge einer Kompression einer Ventildichtung geschlossen wird und eine zugehörige Position als Öffnungspunkt (PO) identifiziert wird.

3. Das Verfahren nach Anspruch 1 oder 2,
wobei der Motor (M) ein Schrittmotor (SM) ist,
wobei die jeweils erreichbare Endposition (P) als Anzahl an Schritten des Schrittmotors (SM) relativ zu einer Referenzposition gezählt wird.

4. Das Verfahren nach Anspruch 3,
wobei eine elektronische Motorsteuerung des Thermostatkopfes (10) dazu eingerichtet ist, ein magnetisches Überspringen oder drohendes magnetisches Überspringen des Schrittmotors (SM) infolge zu hoher Last zu erkennen und in diesem Fall eine Stall-Warnung auszugeben,
wobei die jeweils erreichbare Endposition (P), bis zu welcher der Ventilstift (2) maximal in Ventilschließrichtung bewegbar ist, dadurch erkannt wird, dass bei dieser Position eine Stall-Warnung ausgegeben wird.

5. Das Verfahren nach einem der vorstehenden Ansprüche,
wobei das Ermitteln der Position-Strom-Kennlinie (K) umfasst:
- Versorgen des Motors (M) mit einem, insbesondere konstanten, Motorstrom (I) zum Bewegen des Ventilstifts (2) in Ventilschließrichtung und Bestimmen einer zugehörigen Endposition (P), bis zu welcher der Ventilstift (2) bei diesem Motorstrom (I) maximal in Ventilschließrichtung bewegbar ist;
- Mehrmaliges Verändern des Motorstroms (I) und jeweiliges Ermitteln der zugehörigen Endposition (P);
- Bilden der Position-Strom-Kennlinie (K) aus dem jeweils verwendeten Motorstrom (I) und der ermittelten zugehörigen Endposition (P).

6. Das Verfahren nach einem der vorstehenden Ansprüche,
wobei das Ermitteln der Position-Strom-Kennlinie (K) folgende Prozesse umfasst:
Prozess A: Bewegen des Stößels (12) des Thermostatkopfes (10), um den Ventilstift (2) des Heizkörperventils (1) in eine geöffnete Position zu bringen;
Prozess B: Versorgen des Motors (M) mit einem konstanten Motorstrom (I) zum Bewegen des Ventilstifts (2) in Ventilschließrichtung und Bestimmen einer zugehörigen Endposition (P), bis zu welcher der Ventilstift (2) bei diesem Motorstrom (I) maximal in Ventilschließrichtung bewegbar ist;
Prozess C: Erhöhen des Motorstroms (I) und Ermitteln der zugehörigen Endposition (P), bis zu welcher der Ventilstift (2) maximal in Ventilschließrichtung bewegbar ist;
Prozess D: mehrmaliges Wiederholen von Prozess C mit jeweils weiterem Erhöhen des Motorstroms (I);
Prozess E: Bilden der Position-Strom-Kennlinie (K) aus den jeweils in den Prozessen B bis D verwendeten Motorströmen (I) und den ermittelten zugehörigen Endpositionen (P).

7. Das Verfahren nach Anspruch 5 oder 6,
wobei nach Erreichen einer Endposition (P), bis zu welcher der Ventilstift (2) bei einem bestimmten Motorstrom (I) maximal in Ventilschließrichtung bewegbar ist, der Ventilstift (2) zunächst in Öffnungsrichtung (x) bewegt wird, bevor er mit erhöhtem Motorstrom (I) in Ventilschließrichtung bewegt wird.

8. Das Verfahren nach Anspruch 6 oder nach Anspruch 7, wenn dieser auf Anspruch 6 bezogen ist, weiterhin umfassend:
Auswerten der Position-Strom-Kennlinie (K) zum Ermitteln eines Abflachens (A) der Position-Strom-Kennlinie (K) bei zunehmendem Motorstrom (I); wobei das Ermitteln des Abflachens (A) erfolgt, während Prozess D läuft; und
Beenden von Prozess D, wenn ein Abflachen (A) der Position-Strom-Kennlinie (K) festgestellt wird.

9. Das Verfahren nach einem der vorstehenden Ansprüche, weiterhin umfassend:
Berechnen eines Knicks oder Abflachbereiches der Position-Strom-Kennlinie (K), ab welchem sich mit zunehmendem Motorstrom (I) die jeweils erreichbare Endposition (P), bis zu welcher der Ventilstift (2) maximal in Ventilschließrichtung bewegbar ist, weniger stark ändert; und
Ableiten des Öffnungspunktes (PO) aus einer Position des berechneten Knicks oder Abflachbereiches.

10. Das Verfahren nach einem der vorstehenden Ansprüche, weiterhin umfassend: Festlegen eines Regelbereichs des Thermostatkopfes (10), wobei ein Ende des Regelbereichs durch den Öffnungspunkt (PO) des Heizkörperventils (1) definiert ist.

11. Ein Verfahren zum Betreiben eines Thermostatkopfes (10), umfassend:
Ausführen des Verfahrens nach dem unmittelbar vorstehenden Anspruch, Betreiben des Thermostatkopfes (10) in einem konstanten Heizbetrieb, in welchem eine konstante Solltemperatur beibehalten werden soll, wobei in dem konstanten Heizbetrieb für ein Verstellen des Stößels (12) allein der festgelegte Regelbereich verwendet wird, dessen Ende durch den Öffnungspunkt (PO) des Heizkörperventils (1) definiert ist.

12. Das Verfahren nach dem unmittelbar vorstehenden Anspruch,
wobei im Fall eines Erhaltens eines Befehls zum vollständigen Schließen des Heizkörperventils (1) der Stößel (12) zu einer Schließposition bewegt wird, welche in Ventilschließrichtung außerhalb des Regelbereichs liegt.

13. Ein Thermostatkopf (10), umfassend:
einen Stößel (12) zum Bewegen eines Ventilstifts (2) eines Heizkörperventils (1);
einen Motor (M) zum Bewegen des Stößels (12); und
eine Recheneinrichtung (15);
**dadurch gekennzeichnet,**
**dass** der Thermostatkopf (10) dazu eingerichtet ist, bei Montage an das Heizkörperventil (1) das Verfahren nach einem der vorstehenden Ansprüche auszuführen.
